# EUROPÄISCHE PATENTANMELDUNG

(11) **EP 1 033 074 A2**
(43) Veröffentlichungstag der Anmeldung: **06.09.2000**
(21) Anmeldenummer: 00104437.9
(22) Anmeldetag: 28.02.2000
(51) Int. Cl.: A01K 27/00

(54) **Vorrichtung zum Führen von Pferden**

(30) Priorität: 02.03.1999 DE 19908949
(71) Anmelder: Bohn, Peter, 49635 Badbergen (DE)
(72) Erfinder: Bohn, Peter, 49635 Badbergen (DE)
(74) Vertreter: Thomas, Götz

(57) **Zusammenfassung**

Die Erfindung betrifft eine Vorrichtung (2) zum Führen von Pferden, mit einer biegeschlaffen Führleine (4) und einer an ihrem einen Ende angebrachten Befestigungseinrichtung (6) zur lösbaren Befestigung der Führleine (4) an einem Pferdehalfter. Um außer einer Übertragung von Zugkräften auch eine Übertragung von Druckkräften zu ermöglichen, die das Führen von Pferden erleichtert, wird erfindungsgemäß vorgeschlagen, die biegeschlaffe Führleine (4) zusätzlich mit einem starren Distanzhalteelement (8) zu versehen, das die Führleine (4) auf einem zur Befestigungseinrichtung (6) benachbarten Abschnitt umgibt oder von dieser umgeben ist. Eine derartige Vorrichtung lässt sich relativ preisgünstig und unter Verwendung gebräuchlicher Pferdeführleinen (4) herstellen und gestattet es, das Pferd wie mit herkömmlichen Führleinen (4) zu führen und festzubinden.

## Beschreibung

Die Erfindung betrifft eine Vorrichtung zum Führen von Pferden, mit einer biegeschlaffen Führleine und einer an ihrem einen Ende angebrachten Befestigungseinrichtung zur lösbaren Befestigung der Führleine an einem Pferdehalfter.

Vorrichtungen der eingangs genannten Art werden im Reitsport und in der Pferdehaltung eingesetzt, um Pferde an der Hand zu führen und auch gelegentlich um die Pferde anschließend an einem Ring oder dergleichen vorübergehend anzubinden. Die bekannten Vorrichtungen dieser Art bestehen gewöhnlich aus einem geflochtenen Seil oder Strick aus Jute, Baumwolle, Nylon oder anderen Kunstfasern, an dessen einem Ende ein Karabiner- oder Panikhaken befestigt ist, der in einen Ring am Halfter eines zu führenden Pferdes eingeklinkt wird, um die Führleine lösbar am Pferdehalfter zu befestigen.

Beim Führen eines Pferdes kommt es nicht selten vor, dass das Pferd mit dem Kopf in Richtung des Führenden schlägt, nach diesem beißt oder in Richtung des Führenden springt, zum Beispiel, wenn es sich vor etwas auf der gegenüberliegenden Seite erschrocken hat. Mit den bekannten herkömmlichen Führleinen kann der Führende derartige Bewegungen des Pferdes nicht verhindern, weil die mit diesen Führleinen von der Hand des Führenden zum Kopf des Pferdes hergestellte Verbindung zwar auf Zug, nicht jedoch auf Druck belastet werden kann und sich somit nur dazu eignet, Bewegungen des Pferdekopf es oder Pferdes weg vom Führenden zu verhindern.

Aus der EP-A-0 060 100 A1 ist bereits eine Rückhalte- oder Führvorrichtung für Tiere und ihre Verwendung zur Kontrolle von gehenden Tieren, insbesondere Hunden, bekannt, bei der die biegeschlaffe Führleine durch einen starren Schaft ersetzt ist, der an seinem einen Ende eine Befestigungseinrichtung zur lösbaren Befestigung an einem Halsband des Hundes und am anderen Ende einen Handgriff und ggf. eine Schlaufe aufweist, die über die Hand des Führenden gestreift werden kann.

Die bekannte Rückhalte- oder Führvorrichtung lässt sich jedoch nicht zum Führen von Pferden einsetzen. Wenn ein Pferd erschrickt und steigt oder vom Führenden weg zur Seite springt oder seinen Kopf ruckartig vom Führenden wegbewegt, zum Beispiel weil es am Wegrand grasen möchte, kann es beträchtliche Zugkräfte von 1 000 N und mehr auf die Führvorrichtung ausüben. Dies hat zur Folge, dass eine nur mit einer Hand festgehaltene starre Führvorrichtung, wie aus der EP-A-0 060 100 A1 bekannt, dem Führenden aus der Hand gerissen wird, so dass dieser die Kontrolle über das Pferd verliert. Wenn der Führende die in der EP-A-0 060 100 A1 vorgeschlagene Schlaufe verwendet, um das Entreißen der Führvorrichtung zu verhindern, kann es besonders bei Kindern oder anderen weniger kräftigen Personen vorkommen, dass sie durch die vom Pferd auf die Schlaufe und damit auf die starre Führvorrichtung ausgeübte Zugkraft in den Weg des Pferdes gezogen werden. Unter ungünstigen Umständen kann dies zu Trittverletzungen durch die Hufe des Pferdes führen, wenn dieses seinen Weg fortsetzt. Ein weiterer Nachteil der bekannten Rückhalte- oder Führvorrichtung besteht darin, dass die an dieser Führvorrichtung geführten Tiere nicht wie mit herkömmlichen Führleinen angebunden werden können.

Ausgehend hiervon liegt der Erfindung die Aufgabe zugrunde, eine Vorrichtung der eingangs genannten Art dahingehend zu verbessern, dass sie sich besser zum Führen und auch zum Festbinden von Pferden eignet und zudem relativ preisgünstig und unter Verwendung marktüblicher Pferdeführleinen herstellbar ist.

Diese Aufgabe wird erfindungsgemäß durch ein starres Distanzhalteelement gelöst, das die biegeschlaffe Führleine auf einem zur Befestigungseinrichtung benachbarten Abschnitt umgibt oder von dieser umgeben ist.

Die erfindungsgemäße Merkmalskombination ermöglicht es dem Führenden, die Vorrichtung mit einer Hand im Bereich des Distanzhalteelements und mit einer Hand weiter hinten an der Führleine zu ergreifen, so dass vom Pferd auf die Führleine ausgeübte Zugkräfte mit beiden Händen abgefangen werden können, während einer Schwenkbewegung des Pferdekopfes oder einer Seitwärtsbewegung des Pferdes in Richtung des Führenden durch Gegendruck auf das Distanzhalteelement entgegengewirkt werden kann. Außerdem werden derartige Bewegungen des Pferdes in Richtung des Führenden vom Distanzhalteelement zum Führenden übertragen, so dass dieser die Bewegungen auch dann frühzeitig bemerkt, wenn seine Aufmerksamkeit gerade nicht auf das Pferd gerichtet ist. Die erfindungsgemäße Vorrichtung ermöglicht es zudem, eine direkte, die Übertragung von Zug- und Drucksignalen ermöglichende Verbindung vom Führenden zum Pferdekopf herzustellen, mit der sich Pferde erheblich leichter als durch schlaffe Führleinen lenken lassen. Die ständig vom Führenden zum Pferd übertragenen Signale zeigen diesem auch eine ständige Aufmerksamkeit des Führenden an, die das Pferd in der Regel dazu veranlassen, aufmerksam zu bleiben und mutwillige Bewegungen zu unterlassen.

Weiter eignet sich der über das Distanzhalteelement überstehende Teil der Führleine auch zum Festbinden des geführten Pferdes. Darüber hinaus kann die Führleine vom Führenden im Bereich ihres über das Distanzhalteelement überstehenden biegeschlaffen Abschnitts ergriffen werden, wenn die Bewegungsfreiheit des Pferdes aus welchen Gründen auch immer vergrößert werden soll.

Ein weiterer Vorteil der erfindungsgemäßen Merkmalskombination liegt in der Verwendbarkeit handelsüblicher Führleinen zur Herstellung der erfindungsgemäßen Vorrichtung, da diese Führleinen sehr häufig aus mehreren schlauchförmig geflochtenen Litzen bestehen, die wiederum aus mehreren Jute-, Baumwoll- oder Nylonfäden geflochten sind.. Derartige Führleinen können ohne die Vornahme jeglicher Änderungen an der Führleine selbst in erfindungsgemäße Vorrichtungen umgewandelt werden, indem man gemäß einer bevorzugten Ausgestaltung der Erfindung ein rohrförmiges Distanzhalteelement auf die Führleine auf schiebt oder ein stab- oder stangenförmiges Distanzhalteelement ins Innere der schlauchförmig geflochtenen Führleine einschiebt, und das Distanzhalteelement dann in der Nähe des Panik- oder Karabinerhakens gegen eine axiale Verschiebung sichert.

Ein Vorteil einer solchen Anbringung des Distanzhalteelements auf oder in der Führleine besteht darin, dass der Übergang zwischen dem Distanzhalteelement und dem biegeschlaffen Führleinenabschnitt an dem vom Panik- oder Karabinerhaken abgewandten Ende des Distanzhalteelements weitgehend übergangslos ausgebildet werden kann, so dass die Hand des Benutzers ohne die Gefahr von Verletzungen über diesen Übergang gleitet, wenn die von einem Pferd auf die Führleine ausgeübte Zugkraft so groß ist, dass das Distanzhalteelement und die Führleine ein Stück weit durch die Hände des Führenden gezogen werden.

Um die Reinigung der Führleine zu erleichtern, ist das Distanzhalteelement vorzugsweise lösbar auf bzw. in der Führleine befestigt. Dies lässt sich besonders einfach durch eine Halteeinrichtung oder Sperre erreichen, die hinter dem vom Pferdehalfter abgewandten Ende des Distanzhalteelements angeordnet wird und gleichzeitig eine axiale Verschiebung des Distanzhalteelements in Längsrichtung der Führleine verhindert oder auf ein vorgegebenes Maß von vorzugsweise 0,4 bis 0,5 m begrenzt.

Bei einem auf die Führleine aufgeschobenen rohrförmigen Distanzhalteelement hat die zuletzt erwähnte begrenzte axiale Verschiebbarkeit den Vorteil, dass sich das Distanzhalteelement vom Panik- oder Karabinerhaken weg auf der Führleine verschieben kann, wenn zum Beispiel das Pferd mit den Vorderhufen in die Höhe steigt. Dies verhindert, dass der Führende durch die dabei auf die Führleine ausgeübte Zugkraft in die Reichweite der Pferdehufe gezogen wird.

Eine Sperre oder Haltevorrichtung, die bei einen rohrförmigen, auf die Führleine aufgeschobenen Distanzhalteelement hinter dessen vom Panik- oder Karabinerhaken abgewandten Ende angeordnet ist, hat zudem den Vorteil, dass sie das Verdrehen des vorzugsweise geradlinigen Distanzhalteelements um seine Längsachse gestattet. Dadurch wird verhindert, dass das Handgelenk des Führenden verdreht wird oder ein Umgreifen erforderlich ist, wenn der Führende von einer Seite des Pferdes auf die andere wechselt und dabei die Vorrichtung im Bereich des Distanzhalteelements festhält.

Die Sperre oder Halteeinrichtung wird vorzugsweise von einer Verdickung des Führleinenquerschnitts gebildet, bevorzugt einem Knoten oder einem Spleiß, wobei der erstere im Hinblick auf die lösbare Befestigung des Distanzhalteelements am meisten bevorzugt wird. Alternativ kann die Sperre oder Halteeinrichtung jedoch auch einen Karabinerring oder ein anderes Haltelement umfassen, das so durch das locker geflochtene Material der Führleine hindurchgestochen und an der Führleine befestigt wird, dass das Distanzhalteelement mit seinem vom Panik- oder Karabinerhaken abgewandten Ende gegen das Halteelement anschlägt. Bei einem aufgeschobenen Distanzhalteelement besteht eine weitere Möglichkeit darin, die Sperre oder Halteeinrichtung innerhalb des Distanzhalteelements unterzubringen, beispielsweise eine lösbare Seilklemme, die bei einer Verschiebung des Distanzhalteelements weg vom Panik- oder Karabinerhaken blockiert.

Gemäß einer weiteren vorteilhaften Ausgestaltung der Erfindung weist das Distanzhalteelement bei einer Führleinenlänge von insgesamt 1,5 m bis 2 m zweckmäßig eine Länge zwischen 0,3 und 0,8 m und bevorzugter zwischen 0,4 und 0,6 m auf, so dass es sich über etwa 20 bis 40 % der Länge der Führleine erstreckt.

Das Distanzhalteelement ist zweckmäßig aus Leichtmetall oder Kunststoff hergestellt, kann jedoch insbesondere bei einer Anbringung im Inneren der Führleine auch aus Holz bestehen.

Im folgenden wird die Erfindung anhand zweier in der Zeichnung dargestellter Ausführungsbeispiele näher erläutert. Es zeigen:
Fig. 1: eine perspektivische Ansicht eines Teils einer erfindungsgemäßen Vorrichtung zum Führen von Pferden mit einer biegeschlaffen Führleine und einem über einen Teil der Führleine geschobenen und diesen umschließenden rohrförmigen Distanzhalteelement;
Fig. 2: einen Längsschnitt durch das Ende des Distanzhalteelements aus Fig. 1, das von einem Karabinerring auf der Führleine festgehalten wird;
Fig. 3: eine perspektivische Ansicht eines Teils einer anderen erfindungsgemäßen Vorrichtung zum Führen von Pferden mit einer schlauchförmig geflochtenen Führleine und einem von einem Teil der Führleine umschlossenen stabförmigen Distanzhalteelement.

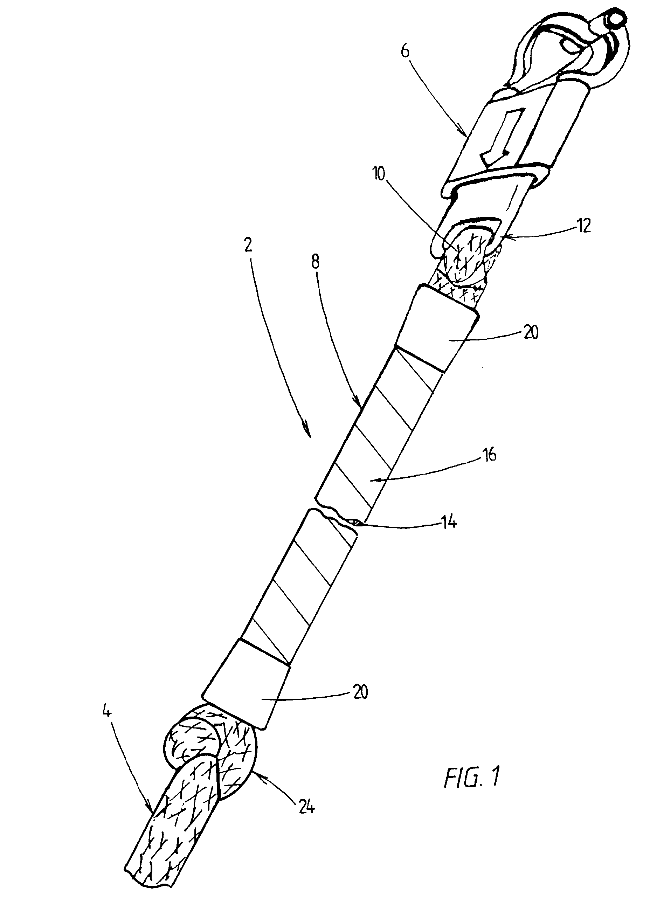

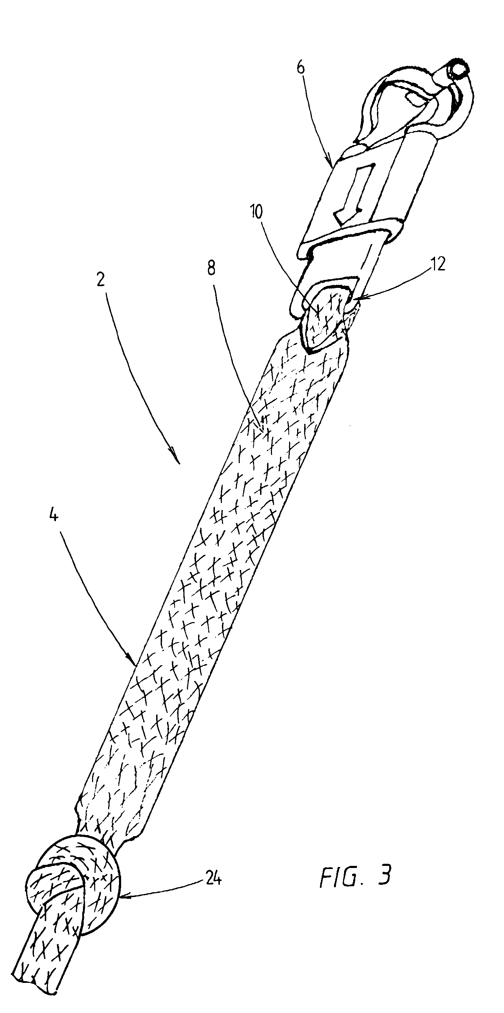

Die in der Zeichnung dargestellten Führvorrichtungen 2 für Pferde bestehen im wesentlichen aus einer geflochtenen Führleine 4, einem an einem Ende der Führleine 4 befestigten Panikhaken 6 sowie einem starren langgestreckten Distanzhalteelement 8, das die Führleine 4 auf einem an den Panikhaken 6 angrenzenden Teil ihrer Länge umschließt (Fig. 1) bzw. von einem an den Panikhaken 6 angrenzenden Teil der Führleine 4 umschlossen wird (Fig. 3).

Die in herkömmlicher Weise ausgebildete Führleine 4 weist eine Länge von etwa 2 m auf und besteht aus einer Mehrzahl von Nylonlitzen, die schlauchartig geflochten sind, so dass sie im Inneren der Führleine 4 einen langgestreckten Hohlraum umschließen. Die einzelnen Nylonlitzen selbst sind in gleicher Weise wie die Führleine 4 geflochten. Durch diese Flechtart der Führleine 4 wird eine gewisse Nachgiebigkeit quer zu ihrer Längsachse erreicht, wodurch die Führleine 4 gut in der Hand eines Führenden liegt.

An dem zum Panikhaken 6 benachbarten Ende der Führleine 4 ist eine Schlaufe 10 ausgebildet, die von einer der Führleine 4 zugewandten geschlossenen Öse 12 des Panikhakens 6 durchsetzt wird. Die Schlaufe 10 wird gebildet, indem zuerst ein kurzes Endstück der Führleine 4 durch die Öse 12 hindurchgeführt und dann mit dem Rest der Führleine 4 verspleißt wird. Dazu wird der Rest der Führleine 4 durch ein Auge hindurchgefädelt, das durch Auseinanderdrücken zweier gleichgroßer Litzenstränge des kurzen Endstücks zwischen diesen Litzensträngen gebildet wird, bevor das kurze Endstück selbst wiederum durch ein weiteres Auge zwischen zwei Litzensträngen des Restes der Führleine 4 hindurchgefädelt und anschließend in den langgestreckten Hohlraum in Inneren der Führleine 4 eingeführt wird, um das Ende dort zu verstecken. Auf diese Weise wird eine feste, mit hohen Zugkräften belastbare Spleißverbindung hergestellt, die für eine zugfeste Anbindung des Panikhakens 6 an der Führleine 4 sorgt.

Der Panikhaken 6 entspricht den üblicherweise an Führleinen 4 verwendeten Panikhaken und wird daher an dieser Stelle nicht näher beschrieben.

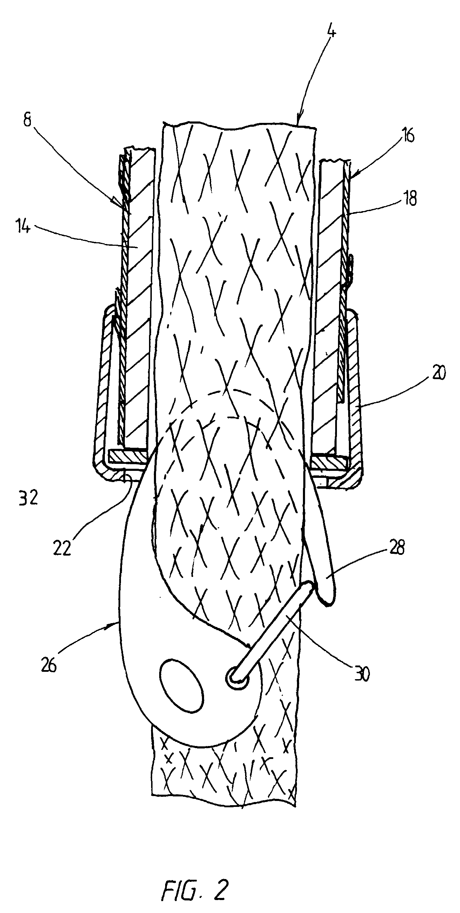

Bei der in den Figuren 1 und 2 dargestellten Vorrichtung 2 besteht das Distanzhalteelement 8 im wesentlichen aus einem geraden Leichtmetallrohr 14 mit einer Länge von 0,4 bis 0,5 m, durch das die Führleine 4 hindurchgefädelt wird, so dass die beiden Enden der Führleine 4 in Verlängerung des Rohres 14 aus dessen beiden stirnseitigen Öffnungen austreten. Das zum Panikhaken 4 benachbarte Ende des Leichtmetallrohrs 14 überdeckt dabei die hinter der Schlaufe 10 in der Führleine 4 gebildete Spleißverbindung. Der Innendurchmesser des Leichtmetallrohrs 14 ist so an den Außendurchmesser der Führleine 4 angepasst, dass sich das Rohr 14 leicht auf die Führleine 4 aufschieben lässt.

Das Leichtmetallrohr 14 kann auf seiner zylindrischen Umfangsfläche mit einer rutschfesten Beschichtung 16 versehen sein, beispielsweise einem schmalen Band 18 aus Leder, Kunstleder, Gummi oder Gewebematerial, das spiralförmig um die Umfangsfläche der Rohres 14 herumgewickelt und vorzugsweise festgeklebt ist, wie es zum Beispiel von Tennisschlägergriffen bekannt ist.

Wie in Fig. 1 und 2 dargestellt, sind die beiden Enden des Leichtmetallrohrs 14 jeweils mit einer Kunststoffkappe 20 versehen, welche die rutschfeste Beschichtung 16 oder Umwicklung übergreift und eine kreisförmige Durchtrittsöffnung 22 für die Führleine 4 aufweist. Die Kappe 20 ist vorzugsweise so geformt, dass sie an den Rohrenden für einen glatten Übergang zwischen dem Leichtmetallrohr 14 und der Führleine 4 sorgt.

Bei der in Fig. 1 dargestellten Vorrichtung 2 wird das Distanzhalteelement 8 in axialer Richtung unverschiebbar von einem einfachen Knoten 24 festgehalten, der unmittelbar hinter dem vom Panikhaken 6 abgewandten Ende des Distanzhalteelements 8 in die Führleine 4 geknotet wird. Der Knoten 24 gestattet eine Drehung des Leichtmetallrohrs 14 auf der Führleine 4 um die gemeinsame Längsachse und lässt sich lösen, um das Leichtmetallrohr 14 zum Waschen oder Reinigen der Führleine 4 von dieser abzunehmen.

Entsprechendes gilt auch für das Leichtmetallrohr 14 in Fig. 2, das statt von einem Knoten 24 von einen Karabinerring 26 festgehalten wird, dessen Hakenende 28 in geöffneten Zustand zwischen zwei Litzensträngen durch die geflochtene Führleine 4 hindurch gestochen wird, bevor der Karabinerring 26 durch Loslassen des federnd vorgespannten Bügels 30 wieder geschlossen wird.

Bei der in Fig. 1 und 2 dargestellten Vorrichtung 2 können der Knoten 24 oder der Karabinerring 26 auch in einem Abstand vom Panikhaken 6 angebracht werden, der größer ist als die Länge des Leichtmetallrohrs 14, so dass sich dieses ein Stück weit auf der Führleine 4 verschieben kann. Dadurch kann verhindert werden, dass der Führende in die Reichweite der Hufe des Pferdes gezogen wird, wenn dieses zum Beispiel beim Scheuen steigt.

Wie am besten in Fig. 2 dargestellt, kann eine Unterlegscheibe 32 aus Stahl zwischen die Kunststoffkappe 20 und die vom Panikhaken 6 abgewandte Stirnfläche des Leichtmetallrohrs 14 eingesetzt werden, welche die bei einem starken Zug an der Führleine 4 zwischen dem Karabinerring 26 und dem Leichtmetallrohr 14 wirkenden Kräfte gleichmäßig auf die gesamte Stirnfläche des Rohrs 14 verteilt und damit eine Verformung des Rohrs 14 verhindert.

Bei der in Fig. 3 dargestellten Vorrichtung wird das Distanzhalteelement 8 von einem geraden, starren, langgestreckten Holz-, Kunststoff- oder Leichtmetallstab (nicht sichtbar) mit kreisförmigen Querschnitt gebildet, der ins Innere der schlauchförmig geflochtenen Führleine 4 eingeschoben ist. Der Stab kann durch einen Knoten 24 in der Führleine 4 gesichert werden, wie in Fig. 3 dargestellt, oder auch durch einen zwischen zwei Litzensträngen der Führleine 4 hindurch gestochenen Karabinerring, in ähnlicher Weise, wie in Fig. 2 dargestellt. Andere Befestigungsmöglichkeiten bestehen zum Beispiel darin, den Hohlraum im Inneren der Führleine 4 durch Vernähen oder Verspleißen hinter dem Stab zu verschließen.

Zum Führen eines Pferdes wird der Panikhaken 6 in einen Ring des Pferdehalfters eingehängt. Bei einem links geführten Pferd umschließt die rechte Hand des Führenden das Leichtmetallrohr 14 (Fig. 1 und 2) bzw. den von der Führleine 4 umgebenen Stab (Fig. 3), während die linke Hand des Führenden die über das Ende des Leichtmetallrohrs 14 oder Stabes überstehende Führleine 4 hält.

Auf diese Weise besteht ein direkter Kontakt zum Pferdekopf, der es gestattet, dem Pferd ständig feine Druck- und Zugsignale zu geben, die dieses dazu veranlassen, aufmerksam zu bleiben. Ruckartigen oder plötzlichen Bewegung des Pferdes oder Pferdekopfs kann sowohl in einer Richtung weg vom Führenden durch Zug am Distanzhalteelement 8 und/oder an der Führleine 4 als auch in einer Richtung auf den Führenden zu durch Druck auf das Distanzhalteelement 8 entgegengewirkt werden, so dass das Pferd weniger Möglichkeiten hat, mutwillig mit dem Kopf zu schlagen, zu beißen oder zu steigen.

Außerdem empfindet das Pferd diese Art des Führens als angenehm und konsequent, da ihm dauernd die Rangordnung Führender/Pferd im positiven Sinne für den Führenden signalisiert wird.

## Patentansprüche

1. Vorrichtung zum Führen von Pferden, mit einer biegeschlaffen Führleine und einer an ihrem einen Ende angebrachten Befestigungseinrichtung zur lösbaren Befestigung der Führleine an einem Pferdehalfter, gekennzeichnet durch ein starres Distanzhalteelement (8), das die biegeschlaffe Führleine (4) auf einem zur Befestigungseinrichtung (6) benachbarten Abschnitt umgibt oder von dieser umgeben ist.

2. Vorrichtung nach Anspruch 1, dadurch gekennzeichnet, dass das starre Distanzhalteelement (8) eine Länge zwischen 0,4 und 0,8 m aufweist.

3. Vorrichtung nach Anspruch 1 oder 2, dadurch gekennzeichnet, dass die Führleine (4) eine Gesamtlänge von 1,5 bis 2 m aufweist.

4. Vorrichtung nach einem der Ansprüche 1 bis 3, dadurch gekennzeichnet, dass das Distanzhalteelement (8, 14) rohrförmig ausgebildet und auf die Führleine (4) aufgeschoben ist.

5. Vorrichtung nach einem der Ansprüche 1 bis 4, dadurch gekennzeichnet, dass das Distanzhalteelement (8, 14) lösbar befestigt ist.

6. Vorrichtung nach Anspruch 5, dadurch gekennzeichnet, dass das Distanzhalteelement (8, 14) auf der Führleine (4) drehbar ist.

7. Vorrichtung nach einem der Ansprüche 1 bis 6, gekennzeichnet durch eine Halteeinrichtung (24, 26), die eine axiale Verschiebung des Distanzelements (8, 14) in Bezug zur Führleine (4) verhindert oder auf ein vorgegebenes Maß begrenzt.

8. Vorrichtung nach Anspruch 7, dadurch gekennzeichnet, dass die Halteeinrichtung von einem Knoten (24) in der Führleine (4) oder von einem durch ein Material der Führleine (4) hindurch gestochenen Halteelement (26) gebildet wird.

9. Vorrichtung nach einen der Ansprüche 1 bis 8, dadurch gekennzeichnet, dass die Halteeinrichtung (24, 26) unmittelbar hinter dem von der Befestigungseinrichtung (6) abgewandten Ende des Distanzhalteelements (8) oder in Abstand von diesen angeordnet ist.

10. Vorrichtung nach einen der Ansprüche 1 bis 9, dadurch gekennzeichnet, dass die Führleine (4) aus einem schlauchförmig gewebten oder geflochtenen Seil oder Strick besteht, der das langgestreckte starre Distanzhalteelement (8) umgibt oder von diesem umgeben ist.
